# EUROPÄISCHE PATENTSCHRIFT

(11) **EP 1 247 788 B1**
(45) Veröffentlichungstag und Bekanntmachung des Hinweises auf die Patenterteilung: **29.12.2004**
(21) Anmeldenummer: 02007024.9
(22) Anmeldetag: 27.03.2002
(51) Int. Cl.: C04B 35/66, C04B 35/043, C04B 35/06, C04B 35/101

(54) **Feuerfester Versatz sowie Elastifizierer für denselben und Verfahren zu seiner Herstellung**
Refractory composition as well as elastic component for the same and method for manufacturing the same
Composition réfractaire ainsi qu'un composant élastique pour le même et procédé pour sa fabrication

(30) Priorität: 05.04.2001 DE 10117026
(43) Veröffentlichungstag der Anmeldung: 09.10.2002
(73) Patentinhaber: Refratechnik Holding GmbH, 85737 Ismaning (DE)
(72) Erfinder: Bartha, Peter, Dr., 37120 Bovenden (DE)
(74) Vertreter: Patentanwälte Dr. Solf & Zapf

(56) Entgegenhaltungen:
- DE-A- 3 527 789
- DE-A- 4 119 251
- DE-A- 4 403 869
- GB-A- 578 280
- DATABASE WPI Section Ch, Week 198246 Derwent Publications Ltd., London, GB; Class L02, AN 1982-99119E XP002257388 & SU 897 758 A (E REFRACTORY IND), 15. Januar 1982 (1982-01-15)

## Beschreibung

Die Erfindung betrifft einen feuerfesten Versatz, insbesondere auf der Basis von Magnesia sowie einen Elastifizierer hierfür und ein Verfahren zur Herstellung des Versatzes und eines Formkörpers hieraus.

Als Resistor wird nachfolgend der Träger der Feuerfestigkeit und damit üblicherweise auch die Hauptkomponente eines feuerfesten Formkörpers oder feuerfester Massen bezeichnet. Dieser Resistor kann im allgemeinsten Fall eine metalloxidische, mineralische, feuerfeste Substanz wie MgO, Al₂O₃, Doloma oder ähnliches sein.

Als Elastifizierer werden nachfolgend Minerale bezeichnet, welche aufgrund einer eigenen, relativ hohen Feuerfestigkeit, aber einer zum Resistor unterschiedlichen Temperaturdehnung, durch Mikrorißbildung und weitere Effekte zu einer Erhöhung der Temperaturwechselbeständigkeit einer Mischung aus Resistor und Elastifizierer - im Gegensatz zum reinen Resistor - führen.

Feuerfeste Formkörper, insbesondere basische feuerfeste Materialien auf der Basis von Magnesia, Doloma, Chromit und/oder Spinell (MgAl₂O₄) werden bei allen Hochtemperaturprozessen mit basischem Schlackenangriff wie z.B. bei der Zement-, Kalk-, Dolomit-, Eisen- und Stahlerzeugung sowie bei der Nichteisenmetallerzeugung und in der Glasindustrie als Auskleidungsmaterial für Öfen, Gefäße und Behandlungsaggregate verwendet. Bei hoher Feuerfestigkeit und guter chemischer Beständigkeit weisen diese Materialien bzw. Formköper jedoch eine hohe Sprödigkeit, d.h. einen hohen Elastizitätsmodul auf, woraus hinsichtlich der Wärmedehnung, Spannungen, mechanischer Beanspruchung und der Temperaturwechselbeständigkeit (TWB) negative Einflüsse auf die Lebensdauer resultieren.

Darüber hinaus ist es bekannt, feuerfeste Formkörper auch auf Basis Al₂O₃ herzustellen, wobei als Rohstoff hier insbesondere Bauxit, Tabulartonerde oder Schmelzkorund eingesetzt werden. Hauptanwendungsgebiete für derartige Steine sind Elektroofendeckel und Pfannen in der Stahlindustrie sowie Zementöfen und die Öfen der Glasindustrie.

Es ist bekannt, die hohen Wärmedehnungsspannungen basischer Feuerfestprodukte bzw. Formkörper durch Verlegen der Feuerfeststeine mit einer dazwischen angeordneten Mörtelfugen, metallischen Einlagen, wie Blechen, Lochblechen oder Netzen zu reduzieren.

Ferner wurden zur Verbesserung der Temperaturwechselbeständigkeit, insbesondere auch basischer feuerfester Materialien in der Vergangenheit zahlreiche Maßnahmen ergriffen. Aus Harders/Kienow, Feuerfestkunde, Herstellung, Eigenschaften und Verwendung feuerfester Baustoffe, Springer Verlag 1960, Kapitel 5.5, Seite 754 und 755 ist es bekannt, die Temperaturwechselbeständigkeit durch den Zusatz von Chromerz (Magnesiachromit) und durch eine sogenannte Mischungslücke, d.h. die Minimierung des Mittelkornanteils (0,2 bis 0,6 mm), deutlich zu verbessern. Ein entscheidender Nachteil der Mischungslücke ist jedoch einerseits, daß ihre Wirkung nur in Verbindung mit einer TWB-Komponente wie z.B. Magnesia bzw. Chromerz in Magnesiachromsteinen ausreichend hoch ist, wenn sich andererseits bei Anwendung der Mischungslücke auch keine optimale Kornpackungsdichte erreichen läßt, wie sie zum Erreichen eines hohen Infiltrationswiderstandes gegenüber Schlacken erwünscht ist. Weiterhin ist bezüglich des Zusatzes von Chromerz (z.B. Harders/Kienow, Seite 754), die Chromerzmenge und die optimale Kornfraktion des Chromerzes definiert worden. Um eine ausreichende TWB zu erlangen, sind dabei Chromerzmengen zwischen 15 und 30 Gew.-% als geeignet erkannt worden. Die elastifizierende Wirkung des Chromerzes in Formkörpern auf Basis Magnesia war bislang unerreicht. Entscheidende Nachteile der Anwendung von Chromerz als Elastifizierer (TWB-Komponente) sind jedoch, daß bei einem Wechsel der Ofenatmosphäre Materialermüdungen stattfinden und daß durch Oxidation unter der Wirkung von Alkalien das im Chromerz dreiwertig vorliegende Chromoxid in toxisches sechswertiges Chromoxid überführt wird, mit allen damit unter arbeitshygienischen und entsorgungstechnischen Gesichtspunkten verbunden Problemen.

Es ist frühzeitig versucht worden (AT-PS 158208), Magnesiasteinen zur Verbesserung der TWB Tonerdepulver, Korund und Aluminiumpulver zuzusetzen, wobei beim Steinbrand in situ Spinell (MgAl₂O₄) gebildet wird. Der dabei gebildete Spinell ist in der Matrix konzentriert, so daß beim Angriff solcher Steine durch Schlacken bevorzugt die für die Festigkeit entscheidende Matrix zerstört wird. Darüber hinaus ist die erzielbare TWB-Verbesserung begrenzt, da der für eine entscheidende Verbesserung notwendige Anteil an Al₂O₃ bei weit über 8 Gew.-% liegen müßte. Dies ist wegen des zu starken Wachsens der Steine infolge Volumenvergrößerung in der Matrix jedoch nicht möglich, da ansonsten Maßhaltigkeit und mechanische Festigkeit zu niedrig und die Porosität zu hoch werden. Eine erhebliche Verbesserung sowohl der TWB als auch der chemischen Beständigkeit von Magnesiasteinen konnte erst durch Hinzusetzen von vorsynthetisiertem Magnesium-Aluminiumspinell in Form von Sinter- oder Schmelzspinell erreicht werden, wobei die üblichen Zusatzmengen zwischen 15 und 25 Gew-% liegen.

Aus der DE 41 19 251 A1 ist es bekannt, einen Spinell-Klinker vom Magnesiumoxid-Aluminiumoxidtyp, der Fe₂O₃ und TiO₂ an den Grenzen zwischen den Kristallkörnern enthält, in einem Schamottestein zu verwenden.

Ferner ist aus der DE 44 03 869 ein feuerfester keramischer Versatz bekannt, der als Träger der Feuerfestigkeit im wesentlichen MgO-Sinter enthält, wobei als Elastifizierer ein Spinell vom Hercynittyp eingesetzt wird.

Allen Versuchen, das Chromerz mit seiner überragenden Elastifizierungseigenschaft für insbesondere basische feuerfeste Produkte durch umwelthygienisch unbedenklichere Stoffe zu ersetzen, ist gemeinsam, daß zwar Elastifizierungswirkungen erreicht werden konnten, diese jedoch hinter denen des Chromerzes liegen. Ferner ist von Nachteil, daß die eingesetzten Elastifizierer wie Hercynit, Schmelz- oder Sinterspinell oder erschmolzenes Zirkonoxid synthetische Rohstoffe sind, die erheblich teurer sind als der natürliche Rohstoff Chromerz.

Feuerfeste Formkörper und damit auch die Elastifiziererkomponente werden zunehmend stärker im Einsatz beansprucht, beispielsweise durch stärkere thermische Belastung und damit zunehmende mechanische Verformung von Industrieöfen (Zementöfen, Kalkdrehöfen, Stahlgießpfannen etc.) oder durch die steigende Verwendung von Sekundärbrennstoffen, die beispielsweise im Zementdrehofen das ansonsten gewünschte Ansatzverhalten negativ beeinflussen und aufgrund von vermindeter Ansatzbildung oder Ansatzabplatzungen zu einem ungewünschten Temperaturwechsel mit begleitender Steinzerstörung führen.

Aufgabe der Erfindung ist es, einen Versatz für feuerfeste Formkörper und einen Elastifizierer zur Verfügung zu stellen, dessen Elastifizierungswirkung sehr hoch, der umwelthygienisch unbedenklich und zudem preiswert ist.

Diese Aufgabe wird mit einem Versatz, insbesondere für feuerfeste Formkörper mit den Merkmalen des Anspruchs 1 gelöst.

Es ist ferner Aufgabe, ein Verfahren zur Herstellung eines Versatzes unter Verwendung des Elastifizierers zu schaffen. Diese Aufgabe wird mit einem Verfahren mit den Merkmalen des Anspruchs 23 gelöst.

Vorteilhafte Weiterbildungen sind in den von diesen Ansprüchen abhängigen Unteransprüchen gekennzeichnet.

Erfindungsgemäß führt das natürliche Mineral Smirgel - auch genannt Schmirgel- zu einer Elastifizierung, die die bislang erreichten Elastifizierungsleistungen bekannter Elastifizierer erheblich übersteigt.

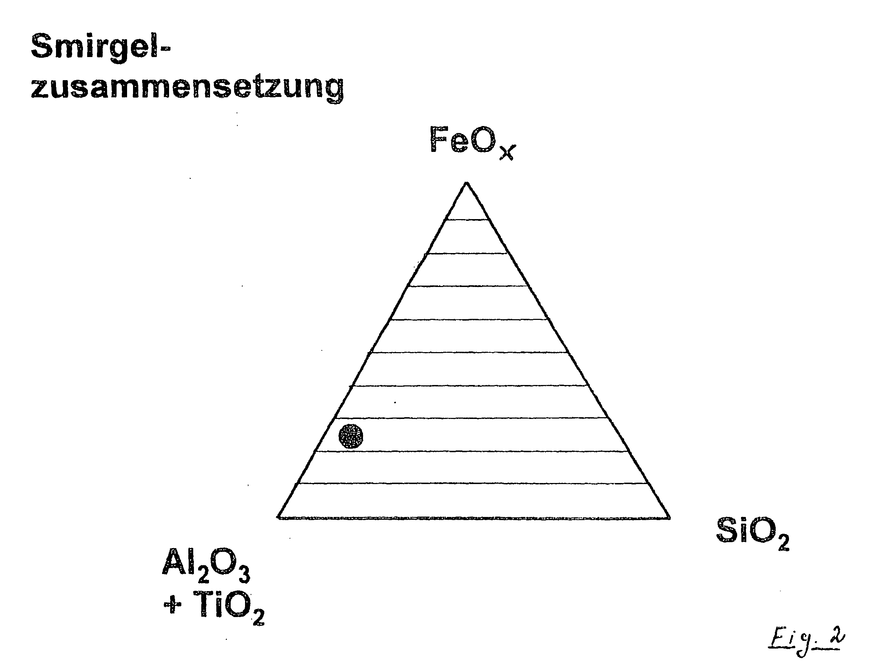

Das Mineral Smirgel, beispielsweise aus körnigem, schwarz-braunem oder braunem Smirgelgestein, das kontakt- oder regionalmetamorph aus Bauxit entstanden ist (beispielsweise Türkei, Naxos, Ural, Massachusetts, Oststeiermark), weist eine chemische Zusammensetzung auf, die aus etwa 5,5 % SiO₂, 64,7 % Al₂O₃, 25,1 % Fe₂O₃, 3 % TiO₂, 0,5 % CaO und 0,4 % MgO, Rest Verunreinigungen, besteht. Die Zusammensetzung ist beispielhaft im Pseudo-Dreistoffsystem FeO-Al₂O₃/TiO₂-SiO₂ (Fig. 2) eingetragen. Da es sich um ein natürliches Mineral handelt, können die einzelnen Anteile der oben angegebenen chemischen Verbindungen im Smirgel schwanken, so daß in allgemeinster Form 25 bis 30 % Fe₂O₃ und 62 bis 75 % Al₂O₃ enthalten sind. Die übrigen Prozente verteilen sich auf SiO₂, TiO₂, CaO und MgO.

In der nachfolgenden Tabelle 1 sind bislang eingesetzte Elastifizierer aufgeführt. Die Beispiele umfassen 4 typische Versätze von feuerfesten basischen Formkörpern mit den bisher typischerweise erreichbaren G-Moduli (%-Angaben in Gewichtsprozent). Die Zugabenmengen der bislang bekannten Elastifizierer Spinell, Chromerz, Hercynit und Zirkonoxid entsprechen handelsüblichen Zugabemengen.

**Tabelle 1**

| | V1 | V2 | V3 | V4 |
|---|---|---|---|---|
| Magnesia | 82% | 80% | 95% | 95% |
| Spinell | 18% | | | |
| Chromerz | | 20% | | |
| Hercynit | | | 5% | |
| Zirkonoxid | | | | 5% |
| G-Modul | 8-12 GPa | 8-12 GPa | 15-20 GPa | 15-20 GPa |

Der Tabelle kann man entnehmen, daß der G-Modul, der zur Erreichung eines befriedigenden Verhaltens in thermomechanisch beanspruchten Aggregaten, beispielsweise Zementdrehöfen, durch Zusatz vergleichsweise hoher Gehalte an Spinellen oder Chromerz zwar erreicht werden kann, dieser jedoch im Falle von Hercynit oder Zirkonoxid vergleichsweise hoch liegt. Hier ist mit einer Beeinträchtigung des Einsatzverhaltens bei hoher mechanischer Beanspruchung zu rechnen, wie sich aus einschlägig bekannten Gleichungen etwa derjenigen von Meedom (ZKG 29 (1976) Nr. 12, S. 568-571), berechnen läßt.

Produkte, wie sie in der Tabelle aufgezeigt sind, werden derzeit mit mehr oder weniger Erfolg eingesetzt.

Die Erfindung wird anhand einer Zeichnung beispielhaft erläutert, es zeigen:
- Fig. 1: eine Wärmedehnungkurve des Smirgels;
- Fig. 2: die Lage des Smirgel im Zusammensetzungsdreieck Fe₂O₃-Al₂O₃/TiO₂-SiO₂.

Überraschenderweise fällt die Elastifizierung in einem Formkörper aus einem Magnesiasinter und dem Mineral Smirgel erheblich höher aus als bei den Elastifzierern, die in der Tabelle angegeben sind. Das speziell ausgewählte, natürliche Mineral Smirgel besteht im wesentlichen aus den Oxiden Al₂O₃ und Fe₂O₃ sowie der Nebenphase SiO₂. Die Wirkung des Smirgels ist überraschend; es läßt sich ein Elastizitätsmodul erzielen, der deutlich unter den mit den bisher üblichen Elastifzierern wie synthetischem Spinell, synthetischem Zirkonoxid, synthetischem Hercynit und sogar natürlichem Chromerz erzielbaren Werten liegt.

Überraschend ist ferner, daß das natürliche Mineral Smirgel einen für die Verwendung als Elastifizierer günstigen Wärmedehnungsverlauf hat, wobei gleichzeitig eine hohe Feuerfestigkeit vorliegt und zudem eine hohe Widerstandsfähigkeit gegen Schlakkenangriffe und Alkalien, insbesondere bei extrem hohen Anwendungstemperaturen, gewährleistbar ist.

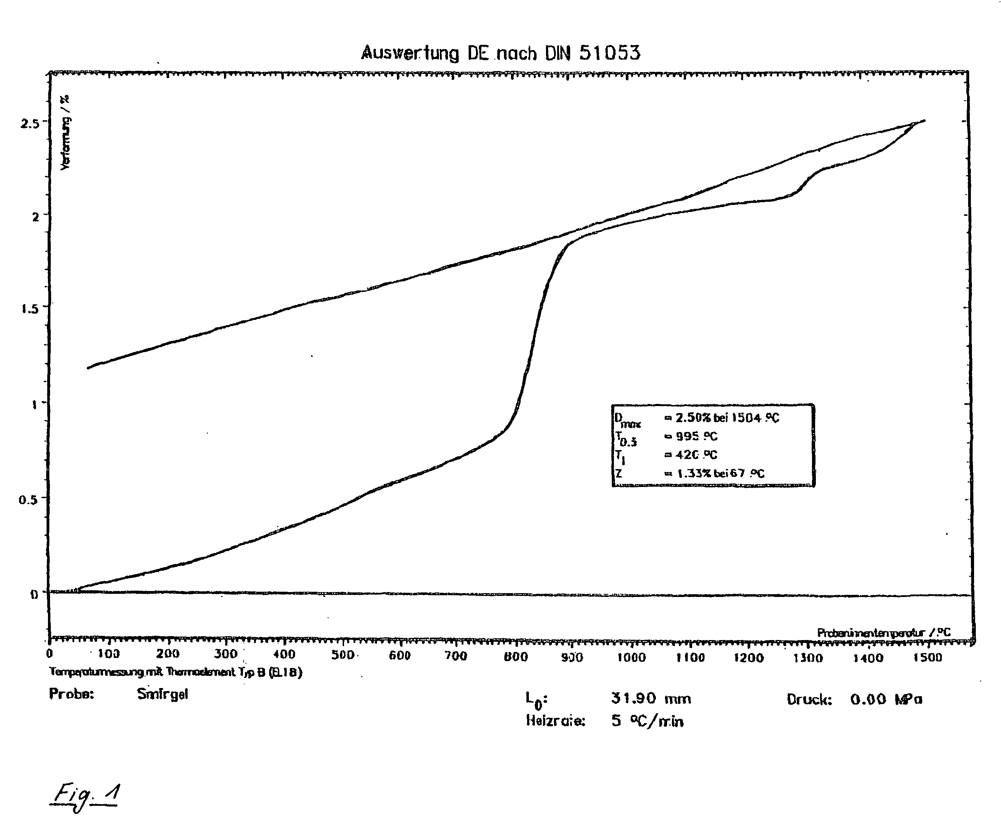

Fig. 1 zeigt die Wärmedehnungskurve des erfindungsgemäß als Elastifizierer ausgewählten, natürlichen Minerals Smirgel. Wie aus Fig. 1 erkennbar ist, zeigt der Smirgel beim ersten Aufheizen eine Wärmedehnungsanomalie mit einer größeren Stufe, die bei etwa 750 °C beginnt und bei ca. 1000 °C endet. Anschließend verläuft die Wärmedehnung in etwa stetig bis 1250 °C, um dort noch einmal eine leichte Stufe auszubilden. Bei der nachfolgenden Abkühlung erkennt man, daß die Verformung linear und stetig geringer wird, wobei nach Erreichen der Ausgangstemperatur eine bleibende Dehnung von 1,2 % linear verbleibt.

Durch die erste Wärmedehnungsstufe sowie die kleine, zweite Wärmedehnungsstufe kann eine Primärelastifizierung im Gefüge erzeugt werden, welche während des ersten Brandes des Formkörpers bereits zu einer erfolgreichen Elastifizierung desselben führt. Als Ursache für die Elastifizierung sind Gefügestörungen wie Verspannungen, Mikrorisse und andere Effekte möglich, welche dazu führen, daß von außen eingetragene Spannungen abgebaut werden können. Zwar können Mikrorisse durch Festkörperreaktionen (Sinterung) wieder "ausgeheilt" werden, jedoch ist die elastifizierende Wirkung des Smirgels auch nach erfolgter Primärelastifizierung so hoch, daß eine Neubildung von Mikrorissen denkbar ist und das mit der Primärelastifizierung geschaffene Mikrorißsystem oder andere Gefügestörungen immer wieder erneuert werden können (Sekundärelastifizierung). Hierauf könnte die überragende Elastifizierungsleistung des Smirgels zurückzuführen sein. Derartige Mikrorisse werden insbesondere entlang der Korngrenzen verwendet.

Im Vergleich hierzu weisen die "reinen" Minerale Korund und Hämatit, aus denen sich der Smirgel theoretisch zusammensetzt, andere thermische Ausdehnungskoeffizienten auf, wobei der thermische Ausdehnungskoeffizient des Korunds bei 6,2 x 10⁻⁶ K⁻¹ und der des Hämatit bei 7,6 x 10⁻⁶ K⁻¹ liegt. Der thermische Ausdehnungskoeffizient des den Resistor stellenden Periklas (MgO) liegt bei 13,5 x 10⁻⁶ K⁻¹, wobei der des häufig eingesetzten Elastifizierers MA-Spinell bei 8,5 x 10⁻⁶ K⁻¹ liegt. Die Verläufe der Dehnungskurven der vorgenannten Minerale sind, im Gegensatz zu dem des Smirgels, stetig. Das Verhalten des Smirgels, also seine Unstetigkeiten der Wärmedehnung, ist aus den stetigen Ausdehnungskurven für eine entsprechende Mischung aus Korund und Hämatit nicht zu erklären.

Selbstverständlich kann Smirgel als Elastifizierer auch in Verbindung mit anderen Elastifizierern verwendet werden. Beispielsweise ist die gemeinsame Verwendung mit Hercynit oder MA-Spinell möglich. Darüber hinaus kann der Smirgel auch mit als Elastifizierern eingesetzten Bauxiten kombiniert werden. Durch die Kombination kann - wenn dies gewünscht ist - der Anteil der Primärelastifizierung, bei an sich gleich bleibender Sekundärelastifizierung, abgesenkt werden. Ferner ist neben der Verwendung des natürlichen Minerals Smirgel oder anstelle desselben die Verwendung eines synthetisierten Minerals mit der Zusammensetzung des Smirgels möglich.

Dieses synthetische Mineral kann beispielsweise durch Sintern oder Schmelzen der Ausgangsstoffe Eisenoxid (gerechnet als Fe₂O₃) und Tonerde erfolgen.

Die Erfindung wird im folgenden anhand eines Beispiels erläutert.

Eine Schmelzmagnesia mit einem Maximalkorn von 4 mm und einer Kornverteilung entsprechend einer typischen Fullerkurve wird mit dem natürlichen Mineral Smirgel in einer Kornverteilung von 0,5 bis 4 mm gemischt. Um das trockene Gemisch zu binden, wird eine erforderliche Menge an Ligninsulfonat zugesetzt und das homogenisierte Gemisch einer für den Feuerfestbereich üblichen hydraulischen Presse zugeführt. Der Versatz bzw. das Gemisch wird mit einem Pressdruck von 130 Megapascal verpresst. Die so erhaltenen Formkörper werden in einem Trocknungsschritt oberhalb 100 °C getrocknet. Anschließend werden die Formkörper bei 1470 °C gebrannt. Diese Sintertemperatur liegt oberhalb der Bildun^{g}stemperatur des sich bildenden Mischspinells.

In der folgenden Tabelle sind die erreichten thermomechanischen Eigenschaften als Funktion der Zusatzmenge an Smirgel dargestellt. Hierfür wurden 3 Beispielversätze nach obigem Beispiel hergestellt, wobei der Smirgelanteil zu Lasten des Magnesiaanteils von 2 auf 10 % erhöht wurde.

**Tabelle 2**

| | V5 | V6 | V7 |
|---|---|---|---|
| Magnesia | 98% | 95% | 90% |
| Smirgel | 2% | 5% | 10% |
| G-Modul | 10.4 GPa | 7.5 GPa | 2.7 GPa |

Der Tabelle kann entnommen werden, daß die Elastizität, gekennzeichnet durch den G-Modul in weiten Grenzen variiert werden kann und innerhalb der Grenzen von der Menge des erfindungsgemäß eingesetzten natürlichen Minerals Smirgel abhängt. Überraschend ist, daß bereits geringe Mengen von nur 2 % Smirgel zu elastischen Moduli führen, wie sie auch für die bisher bekannten Elastifizierer beobachtet werden. Unter der Randbedingung einer Festigkeit von feuerfesten Steinen, die für den Einsatz notwendig ist, um den auftretenden Spannungen, speziell Biegespannungen - für die keramische Erzeugnisse general am empfindlichsten sind - und die bei einem Wert von ca. 3 Megapascal liegt, läßt sich der G-Modul bis auf einen Wert von 2,7 Gigapascal senken. Ein derart niedriger Wert wurde bisher in keinem Fall für feuerfeste Steine erzielt. Der Mechanismus, der zu der dramatischen Senkung des G-Moduls führt, ist bisher nicht bekannt. Vermutlich handelt es sich um die bereits beschriebene Mikrorißbildung zwischen dem Resistor und dem zugesetzten Smirgel, hervorgerufen durch die Primär- und Sekundärelastifizierung, bzw. um Gefügestörungen durch unterschiedlich hohe Wärmedehnungskoeffizienten.

Die erfindungsgemäß hergestellten Formkörper lassen sich überall dort vorteilhaft einsetzen, wo starke Temperaturwechsel auftreten und wo mechanische und thermomechanische Spannungen auftreten. Dies sind beispielsweise Sinter- und Übergangszonen von Drehrohröfen der Steine- und Erdenindustrie, in der Eisen- und Nichteisenmetallindustrie sowie Schmelz- und Behandlungsgefäße der Eisen- und Nichteisenindustrie.

Bei dem erfindungsgemäßen Versatz und dem erfindungsgemäßen Formkörper ist von Vorteil, daß durch den Zusatz des Smirgels eine Elastifizierung des Formkörpers erzielt wird, die noch deutlich über der bislang unerreichten Elastifizierung durch Chromerz liegt. Darüber hinaus ist von Vorteil, daß der erfindungsgemäß eingesetzte Elastifizierer in keiner Weise toxisch ist und somit völlig bedenkenlos sowohl bezüglich der Arbeitshygiene als auch der Entsorgung eingesetzt werden kann.

Weiterhin ist von Vorteil, daß es sich um einen Rohstoff handelt, der in natürlichen Lagerstätten in abbauwürdigen Mengen vorkommt. Für seine Aufbereitung oder Herstellung sind keine hohen Mengen an Energie notwendig, wie beispielsweise für die Erzeugung synthetischer Rohstoffe, wie etwa Schmelzspinell. Ferner ist von Vorteil, daß dieser natürliche Rohstoff in erheblich geringeren Mengen eine höhere Elastifizierungsleistung im Formkörper erbringt als die synthetischen Elastifizierer und auch insofern kostengünstiger ist.

## Patentansprüche

1. Feuerfester Versatz, insbesondere zur Herstellung feuerfester Formkörper aufweisend:
a) eine feuerfeste metalloxidische Hauptkomponente in Anteilen von 80 M-% bis 99,5 M-%
b) eine körnige, elastifizierende Komponente aufweisend das Mineral Smirgel, wobei das Mineral Smirgel im wesentlichen aus Fe₂O₃ und Al₂O₃ ausgebildet ist.
c) gegebenenfalls eine Binderkomponente wie Ligninsulfonat.

2. Versatz nach Anspruch 1,
**dadurch gekennzeichnet, dass**
die elastifizierende Komponente das natürliche Mineral Smirgel ist.

3. Versatz nach Anspruch 1,
**dadurch gekennzeichnet, dass**
die elastifizierende Komponente ein synthetisches Mineral mit der Zusammensetzung des Smirgel ist.

4. Versatz nach einem der vorhergehenden Ansprüche,
**dadurch gekennzeichnet, dass**
die elastifizierende Komponente eine Mischung aus natürlichem und einem synthetischen Mineral mit der Zusammensetzung des Smirgel ist.

5. Versatz nach einem der vorhergehenden Ansprüche,
**dadurch gekennzeichnet, dass**
die elastifizierende Komponente eisenreiche Bauxite enthält.

6. Versatz nach einem der vorhergehenden Ansprüche,
**dadurch gekennzeichnet, dass**
die elastifizierende Komponente im wesentlichen Fe₂O₃ und Al₂O₃ enthält.

7. Versatz nach einem der vorhergehenden Ansprüche,
**dadurch gekennzeichnet, dass**
die elastifizierende Komponente in Anteilen von 0,5 M-% bis 15 M-% im Versatz enthalten ist.

8. Versatz nach einem der vorhergehenden Ansprüche,
**dadurch gekennzeichnet, dass**
die feuerfeste metalloxidische Hauptkomponente Schmelzmagnesia und/oder Sintermagnesia enthält.

9. Versatz nach einem der vorhergehenden Ansprüche,
**dadurch gekennzeichnet, dass**
die feuerfeste metalloxidische Hauptkomponente Tonerde enthält.

10. Versatz nach einem der vorhergehenden Ansprüche,
**dadurch gekennzeichnet, dass**
die feuerfeste metalloxidische Hauptkomponente im wesentlichen aus MgO ausgebildet ist.

11. Versatz nach einem der Ansprüche 1 bis 9,
**dadurch gekennzeichnet, dass**
die feuerfeste metalloxidische Hauptkomponente im wesentlichen aus Al₂O₃ ausgebildet ist.

12. Versatz nach einem der vorhergehenden Ansprüche,
**dadurch gekennzeichnet, dass**
die feuerfeste metalloxidische Hauptkomponente CaO enthält.

13. Versatz nach einem der Ansprüche 1 bis 10 oder 12,
**dadurch gekennzeichnet, dass**
die feuerfeste metalloxidische Hauptkomponente im wesentlichen aus Doloma ausgebildet ist.

14. Versatz nach einem vorhergehenden Ansprüche,
**dadurch gekennzeichnet, dass**
die feuerfeste metalloxidische Hauptkomponente in einer Körnung von 0 mm bis 10 mm, insbesondere 0 mm bis 5 mm vorliegt.

15. Versatz nach einem vorhergehenden Ansprüche,
**dadurch gekennzeichnet, dass**
die feuerfeste metalloxidische Hauptkomponente eine Kornverteilung entsprechend einer Fullerkurve aufweist.

16. Versatz nach einem vorhergehenden Ansprüche,
**dadurch gekennzeichnet, dass**
die elastifizierende Komponente in einer Körnung von 0 mm bis 10 mm, insbesondere 0,5 mm bis 4,0 mm vorliegt.

17. Versatz nach einem vorhergehenden Ansprüche,
**dadurch gekennzeichnet, dass**
der Elastifizierer eine Kornverteilung entsprechend einer Fullerkurve aufweist.

18. Versatz nach einem vorhergehenden Ansprüche,
**dadurch gekennzeichnet, dass**
gegebenenfalls Nebenbestandteile wie Antioxidantien, Presshilfsmittel sowie gegebenenfalls weitere übliche Nebenbestandteile enthalten sind.

19. Verwendung eines Versatzes nach einem der vorhergehenden Ansprüche zur Herstellung von Formkörpern.

20. Verwendung eines Versatzes nach einem der Ansprüche 1 bis 18 zur Herstellung von feuerfesten Spritz-, Vibrations-, Ramm- oder Gießmassen.

21. Verfahren zur Herstellung eines feuerfesten Versatzes nach einem oder mehreren der Ansprüche 1 bis 18,
**dadurch gekennzeichnet, dass**
eine feuerfeste metalloxidische Hauptkomponente mit einer elastifzierenden Komponente aufweisend das Mineral Smirgel versetzt und gemischt wird.

22. Verfahren nach Anspruch 21,
**dadurch gekennzeichnet, dass**
zur Verringerung der Primärelastifizierung bei gleicher Sekundärelastifizierung eine Mischung aus dem Mineral Smirgel und anderen Elastifizierern verwendet wird.

23. Verfahren nach 21 oder 22,
**dadurch gekennzeichnet, dass**
zur Erhöhung des primärelastifizierenden Effekts der Anteil an Smirgel auf Kosten der anderen Elastifizierer in der elastifizierenden Komponente erhöht wird.

24. Verfahren nach einem der Ansprüche 21 oder 23,
**dadurch gekennzeichnet, dass**
als elastifizierende Komponente ein natürliches Mineral oder. Gemenge von natürlichen Mineralien verwendet wird.

25. Verfahren nach einem der Ansprüche 21 bis 23,
**dadurch gekennzeichnet, dass**
als elastifizierende Komponente ein synthetisches Mineral oder Gemenge aus synthetischen Mineralen verwendet wird.

26. Verfahren nach einem der Ansprüche 21 bis 23,
**dadurch gekennzeichnet, dass**
als elastifizierende Komponente eine Mischung aus natürlichen und synthetischen Mineralen verwendet wird.

27. Verfahren nach einem der Ansprüche 21 bis 23,
**dadurch gekennzeichnet, dass**
als elastifizierende Komponente das natürliche Mineral Smirgel verwendet wird.

28. Verfahren nach einem der Ansprüche 21 bis 27,
**dadurch gekennzeichnet, dass**
eine elastifizierende Komponente verwendet wird, welche eisenreiche Bauxite enthält.

29. Verfahren nach einem der Ansprüche 21 bis 28,
**dadurch gekennzeichnet, dass**
die elastifizierende Komponente in Anteilen von 0,5 Gew.-% bis 15 Gew.-% verwendet wird.

30. Verfahren nach einem der Ansprüche 21 bis 29,
**dadurch gekennzeichnet, dass**
die feuerfeste metalloxidische Hauptkomponente in Anteilen von 80 Gew.-% bis 99,5 Gew.-% zugesetzt wird.

31. Verfahren nach einem der Ansprüche 21 bis 30,
**dadurch gekennzeichnet, dass**
eine feuerfeste metalloxidische Hauptkomponente verwendet wird, welche Schmelzmagnesia und/oder Sintermagnesia enthält.

32. Verfahren nach einem der Ansprüche 21 bis 31,
**dadurch gekennzeichnet, dass**
eine feuerfeste metalloxidische Hauptkomponente verwendet wird, die Tonerde enthält.

33. Verfahren nach einem der Ansprüche 21 bis 32,
**dadurch gekennzeichnet, dass**
eine feuerfeste metalloxidische Hauptkomponente verwendet wird, welche im wesentlichen aus MgO ausgebildet ist.

34. Verfahren nach einem der Ansprüche 21 bis 32,
**dadurch gekennzeichnet, dass**
eine feuerfeste metalloxidische Hauptkomponente verwendet wird, welche im wesentlichen aus Tonerde ausgebildet ist.

35. Verfahren nach einem der Ansprüche 21 bis 32,
**dadurch gekennzeichnet, dass**
eine feuerfeste metalloxidische Hauptkomponente verwendet wird, die im wesentlichen aus Doloma ausgebildet ist.

36. Verfahren nach einem der Ansprüche 21 bis 35,
**dadurch gekennzeichnet, dass**
die feuerfeste metalloxidische Hauptkomponente mit einer Körnung von 0 mm bis 10 mm, insbesondere 0 mm bis 5 mm verwendet wird.

37. Verfahren nach einem der Ansprüche 21 bis 36,
**dadurch gekennzeichnet, dass**
die feuerfeste metalloxidische Hauptkomponente mit einer Kornverteilung entsprechend einer Fullerkurve verwendet wird.

38. Verfahren nach einem der Ansprüche 21 bis 37,
**dadurch gekennzeichnet, dass**
die elastifizierende Komponente mit einer Körnung von 0 mm bis 10 mm, insbesondere 0,5 mm bis 4 mm verwendet wird.

39. Verfahren nach einem der Ansprüche 21 bis 38,
**dadurch gekennzeichnet, dass**
die elastifizierende Komponente mit einer Kornverteilung entsprechend einer Fullerkurve verwendet wird.

40. Verfahren nach einem der Ansprüche 21 bis 39,
**dadurch gekennzeichnet, dass**
die Bestandteile des Versatzes sowie gegebenenfalls weitere übliche Nebenbestandteile in einem Mischer vorgelegt und gegebenenfalls unter Zugabe einer Binderkomponente miteinander bis zur Homogenität vermischt werden.

41. Verfahren nach einem der Ansprüche 21 bis 40,
**dadurch gekennzeichnet, dass**
die Bestandteile entsprechend einem gewünschten Kornband aus verschiedenen Kornfraktionen zusammengestellt und anschließend dem Mischer aufgegeben werden.

42. Verfahren nach einem der Ansprüche 21 bis 41,
**dadurch gekennzeichnet, dass**
der Versatz entsprechend portioniert mit einem Pressdruck von >50 MPa, insbesondere 80 MPa bis 200 MPa, vorzugsweise 130 MPa zu Formkörpern verpresst wird.

43. Verfahren nach einem der Ansprüche 21 bis 42,
**dadurch gekennzeichnet, dass**
der verpresste Versatz bei Temperaturen oberhalb 100°C, insbesondere bei 120°C bis 150°C getrocknet wird.

44. Verfahren nach einem der Ansprüche 21 bis 43,
**dadurch gekennzeichnet, dass**
der Versatz nach dem Verpressen und Trocknen oberhalb der Bildungstemperatur des sich bildenden Mischspinells gebrannt wird.

45. Verfahren nach einem der Ansprüche 21 bis 44,
**dadurch gekennzeichnet, dass**
der verpresste getrocknete Versatz bei 1000°C bis 1700°C, insbesondere 1200°C bis 1600°C, gebrannt wird.

46. Verwendung von Smirgel als Elastifizierer für feuerfeste Formkörper oder Massen.

## Claims

1. Refractory batch, in particular for producing refractory shaped bodies, having:
a) a refractory metal-oxide main component in amounts of from 80% by mass to 99.5% by mass,
b) a granular, elasticizing component which includes the mineral emery, the mineral emery substantially being formed from Fe₂O₃ and Al₂O₃,
c) if appropriate, a binder component, such as lignin sulphonate.

2. Batch according to Claim 1, **characterized in that** the elasticizing component is the natural mineral emery.

3. Batch according to Claim 1, **characterized in that** the elasticizing component is a synthetic mineral having the composition of emery.

4. Batch according to one of the preceding claims, **characterized in that** the elasticizing component is a mixture of natural emery and a synthetic mineral having the composition of emery.

5. Batch according to one of the preceding claims, **characterized in that** the elasticizing component contains iron-rich bauxites.

6. Batch according to one of the preceding claims, **characterized in that** the elasticizing component substantially comprises Fe₂O₃ and Al₂O₃.

7. Batch according to one of the preceding claims, **characterized in that** the elasticizing component is present in amounts of from 0.5% by mass to 15% by mass in the batch.

8. Batch according to one of the preceding claims, **characterized in that** the refractory metal-oxide main component contains fused magnesia and/or sintered magnesia.

9. Batch according to one of the preceding claims, **characterized in that** the refractory metal-oxide main component contains alumina.

10. Batch according to one of the preceding claims, **characterized in that** the refractory metal-oxide main component is substantially formed from MgO.

11. Batch according to one of Claims 1 to 9, **characterized in that** the refractory metal-oxide main component is substantially formed from Al₂O₃.

12. Batch according to one of the preceding claims, **characterized in that** the refractory metal-oxide main component contains CaO.

13. Batch according to one of Claims 1 to 10 or 12, **characterized in that** the refractory metal-oxide main component is substantially formed from doloma.

14. Batch according to one of the preceding claims, **characterized in that** the refractory metal-oxide main component is present in a grain size of from 0 mm to 10 mm, in particular 0 mm to 5 mm.

15. Batch according to one of the preceding claims, **characterized in that** the refractory metal-oxide main component has a grain size distribution corresponding to a Fuller curve.

16. Batch according to one of the preceding claims, **characterized in that** the elasticizing component is present in a grain size of from 0 mm to 10 mm, in particular 0.5 mm to 4.0 mm.

17. Batch according to one of the preceding claims, **characterized in that** the elasticizer has a grain size distribution corresponding to a Fuller curve.

18. Batch according to one of the preceding claims, **characterized in that** if appropriate auxiliary constituents, such as antioxidants, pressing aids and if appropriate further standard auxiliary constituents, are present.

19. Use of a batch according to one of the preceding claims for the production of shaped bodies.

20. Use of a batch according to one of Claims 1 to 18 for the production of refractory spraying, vibration, ramming or casting compounds.

21. Process for producing a refractory batch according to one or more of Claims 1 to 18, **characterized in that** a refractory metal-oxide main component is combined and mixed with an elasticizing component which includes the mineral emery.

22. Batch according to Claim 21, **characterized in that**, to reduce the primary elasticizing while keeping the same secondary elasticizing, a mixture of the mineral emery and other elasticizers is used.

23. Process according to Claim 21 or 22, **characterized in that**, to increase the primary elasticizing effect, the level of emery is increased at the expense of the other elasticizers in the elasticizing component.

24. Process according to Claim 21 or 23, **characterized in that** the elasticizing component used is a natural mineral or a blend of natural minerals.

25. Process according to one of Claims 21 to 23, **characterized in that** the elasticizing component used is a synthetic mineral or a blend of synthetic minerals.

26. Process according to one of Claims 21 to 23, **characterized in that** the elasticizing component used is a mixture of natural and synthetic minerals.

27. Process according to one of Claims 21 to 23, **characterized in that** the elasticizing component used is the natural mineral emery.

28. Process according to one of Claims 21 to 27, **characterized in that** an elasticizing component which contains iron-rich bauxites is used.

29. Process according to one of Claims 21 to 28, **characterized in that** the elasticizing component is used in amounts of from 0.5% by weight to 15% by weight.

30. Process according to one of Claims 21 to 29, **characterized in that** the refractory metal-oxide main component is added in amounts of from 80% by weight to 99.5% by weight.

31. Process according to one of Claims 21 to 30, **characterized in that** a refractory metal-oxide main component which contains fused magnesia and/or sintered magnesia is used.

32. Process according to one of Claims 21 to 31, **characterized in that** a refractory metal-oxide main component which contains alumina is used.

33. Process according to one of Claims 21 to 32, **characterized in that** a refractory metal-oxide main component which is substantially formed from MgO is used.

34. Process according to one of Claims 21 to 32, **characterized in that** a refractory metal-oxide main component which is substantially formed from alumina is used.

35. Process according to one of Claims 21 to 32, **characterized in that** a refractory metal-oxide main component which is substantially formed from doloma is used.

36. Process according to one of Claims 21 to 35, **characterized in that** the refractory metal-oxide main component is used in a grain size of from 0 mm to 10 mm, in particular 0 mm to 5 mm.

37. Process according to one of Claims 21 to 36, **characterized in that** the refractory metal-oxide main component is used in a grain size distribution corresponding to a Fuller curve.

38. Process according to one of Claims 21 to 37, **characterized in that** the elasticizing component is used in a grain size of from 0 mm to 10 mm, in particular 0.5 mm to 4 mm.

39. Process according to one of Claims 21 to 38, **characterized in that** the elasticizing component is used in a grain size distribution corresponding to a Fuller curve.

40. Process according to one of Claims 21 to 39, **characterized in that** the constituents of the batch, as well as if appropriate further standard auxiliary constituents, are introduced into a mixer and are then mixed with one another until a homogeneous state is achieved, if appropriate with the addition of a binder component.

41. Process according to one of Claims 21 to 40, **characterized in that** the constituents are compiled from various grain fractions in accordance with a desired grain size range and are then added to the mixer.

42. Process according to one of Claims 21 to 41, **characterized in that** the batch, having been divided into suitable portions, is pressed to form shaped bodies under a pressure of > 50 MPa, in particular 80 MPa to 200 MPa, preferably 130 MPa.

43. Process according to one of Claims 21 to 42, **characterized in that** the pressed batch is dried at temperatures over 100°C, in particular at 120°C to 150°C.

44. Process according to one of Claims 21 to 43, **characterized in that** the batch, after it has been pressed and dried, is fired at above the formation temperature of the mixed spinel that forms.

45. Process according to one of Claims 21 to 44, **characterized in that** the pressed and dried batch is fired at from 1000°C to 1700°C, in particular 1200°C to 1600°C.

46. Use of emery as elasticizer for refractory shaped bodies or compounds.

## Revendications

1. Composition réfractaire, notamment pour la fabrication d'articles de moulage réfractaires présentant :
a) un composant principal d'oxyde de métal réfractaire dans des proportions de 80 % molaires à 99,5 % molaires,
b) un composant élastique particulaire présentant le minéral dit corindon granulaire, dans lequel le minéral dit corindon granulaire est formé essentiellement à partir de Fe₂O₃ et d'Al₂O₃,
c) le cas échéant, un composant de liaison tel que le ligninesulfonate.

2. Mélange selon la revendication 1, **caractérisé en ce que** le composant élastique est le minéral naturel dit corindon granulaire.

3. Mélange selon la revendication 1, **caractérisé en ce que** le composant élastique est un minéral de synthèse présentant une composition de corindon granulaire,

4. Mélange selon l'une quelconque des revendications précédentes, **caractérisé en ce que** le composant élastique est un mélange d'un minéral de synthèse et d'un minéral naturel présentant la composition du corindon granulaire.

5. Mélange selon l'une quelconque des revendications précédentes, **caractérisé en ce que** le composant élastique contient de la bauxite riche en fer.

6. Mélange selon l'une quelconque des revendications précédentes, **caractérisé en ce que** le composant élastique présente essentiellement du Fe₂O₃ et de l'Al₂O₃.

7. Mélange selon l'une quelconque des revendications précédentes, **caractérisé en ce que** le composant élastique est contenu dans des proportions de 0,5 % molaires à 15 % molaires dans le mélange.

8. Mélange selon l'une quelconque des revendications précédentes, **caractérisé en ce que** le composant principal d'oxyde métallique réfractaire contient de l'oxyde de magnésium fondu et/ou de l'oxyde de magnésium fritté.

9. Mélange selon l'une quelconque des revendications précédentes, **caractérisé en ce que** le composant principal d'oxyde métallique réfractaire contient de l'argile.

10. Mélange selon l'une quelconque des revendications précédentes, **caractérisé en ce que** le mélange principal d'oxyde métallique réfractaire est formé essentiellement à partir de MgO.

11. Mélange selon l'une quelconque des revendications 1 à 9, **caractérisé en ce que** le composant principal d'oxyde métallique réfractaire est composé essentiellement d'Al₂O₃.

12. Mélange selon l'une quelconque des revendications précédentes, **caractérisé en ce que** le composant principal d'oxyde métallique réfractaire contient du CaO.

13. Mélange selon l'une quelconque des revendications de 1 à 10 ou 12, **caractérisé en ce que** le composant principal d'oxyde métallique réfractaire est formé essentiellement à l'aide de la dolomie.

14. Mélange selon l'une quelconque des revendications précédentes, **caractérisé en ce que** le composant principal d'oxyde métallique réfractaire est présente dans une granulométrie de 0 mm à 10 mm, notamment de 0 mm à 5 mm.

15. Mélange selon l'une quelconque des revendications précédentes, **caractérisé en ce que** le composant principal d'oxyde métallique réfractaire présente une répartition de particules correspondant à la courbe de Fuller.

16. Mélange selon l'une quelconque des revendications précédentes, **caractérisé en ce que** le composant élastique est présent dans une granulométrie de 0 mm à 10 mm, notamment de 0,5 mm à 4,0 mm.

17. Mélange selon l'une quelconque des revendications précédentes, **caractérisé en ce que** le composant élastique présente une répartition de particules correspondant à la courbe de Fuller.

18. Mélange selon l'une quelconque des revendications précédentes, **caractérisé en ce que** les composants secondaires tels que des antioxydants, des agents de compression ainsi que le cas échéant, d'autres composants secondaires sont contenus.

19. Utilisation d'un mélange selon l'une quelconque des revendications précédentes pour la fabrication d'articles de moulage.

20. Utilisation d'un mélange selon l'une quelconque des revendications 1 à 18 pour la fabrication de masses de pulvérisation, de vibration, de battage ou de coulage réfractaires.

21. Procédé pour la fabrication d'une composition réfractaire d'après l'une quelconque ou plusieurs des revendications 1 à 18, **caractérisé en ce que** le composant principal d'oxyde métallique réfractaire est ajouté et mélangé avec un composant élastique présentant le minéral dit corindon granulaire.

22. Procédé selon la revendication 21, **caractérisé en ce que** pour réduire l'élastification primaire lors de l'élastification secondaire, un mélange à partir du minéral Smirgel et d'autres plastifiants est utilisé.

23. Procédé selon la revendication 21 ou 22, **caractérisé en ce que** pour l'élévation de l'effet d'élastification primaire, la proportion en corindon granulaire est élevée par rapport aux autres composants élastiques dans le composant élastique.

24. Procédé selon l'une quelconque des revendications 21 ou 23, **caractérisé en ce que** comme composant élastique, on utilise un minéral naturel ou des mélanges de minéraux naturels.

25. Procédé selon l'une quelconque des revendications 21 à 23, **caractérisé en ce que** comme composant élastique, on utilise un minéral de synthèse ou un mélange de minéraux de synthèse.

26. Procédé selon l'une quelconque des revendications 21 à 23, **caractérisé en ce que** comme composant élastique, on utilise un mélange de minéraux de synthèse et naturels.

27. Procédé selon l'une quelconque des revendications 21 à 23, **caractérisé en ce que** comme composant élastique, on utilise le minéral naturel dit corindon granulaire.

28. Procédé selon l'une quelconque des revendications 21 à 27, **caractérisé en ce qu'**un composant élastique est utilisé, lequel contient de la bauxite riche en fer.

29. Procédé selon l'une quelconque des revendications 21 à 28, **caractérisé en ce que** le composant élastique est utilisé dans des proportions de 0,5 % en poids à 15 % en poids.

30. Procédé selon l'une quelconque des revendications 21 à 29, **caractérisé en ce que** le composant principal d'oxyde métallique réfractaire est ajouté dans des proportions de 80 % en poids à 99,5 % en poids.

31. Procédé selon l'une quelconque des revendications 21 à 30, **caractérisé en ce que** le composant principal d'oxyde métallique réfractaire est utilisé, lequel contient de l'oxyde de magnésium fondu et/ou de l'oxyde de magnésium fritté.

32. Procédé selon l'une quelconque des revendications 21 à 31, **caractérisé en ce qu'**un composant principal d'oxyde métallique réfractaire est utilisé, lequel contient de l'argile.

33. Procédé selon l'une quelconque des revendications 21 à 32, **caractérisé en ce qu'**un composant principal d'oxyde métallique réfractaire est utilisé, lequel est formé essentiellement à partir de MgO.

34. Procédé selon l'une quelconque des revendications 21 à 32, **caractérisé en ce qu'**un composant principal d'oxyde métallique réfractaire est utilisé, lequel est formé essentiellement à partir d'argile.

35. Procédé selon l'une quelconque des revendications 21 à 32, **caractérisé en ce qu'**un composant principal d'oxyde métallique réfractaire est utilisé, lequel est formé essentiellement à partir de dolomie.

36. Procédé selon l'une quelconque des revendications 21 à 35, **caractérisé en ce que** le composant principal d'oxyde métallique réfractaire est utilisé dans une granulométrie de 0 mm à 10 mm, notamment de 0 mm à 5 mm.

37. Procédé selon l'une quelconque des revendications 21 à 36, **caractérisé en ce que** le composant principal d'oxyde métallique réfractaire avec une répartition granulométrique et correspondant à la courbe de Fuller est utilisé.

38. Procédé selon l'une quelconque des revendications 21 à 37, **caractérisé en ce que** le composant élastique présentant une granulométrie de 0 mm à 10 mm, notamment de 0,5 mm à 4 mm est utilisé.

39. Procédé selon l'une quelconque des revendications 21 à 38, **caractérisé en ce que** le composant élastique présente une répartition granulométrique correspondant à la courbe de Fuller.

40. Procédé selon l'une quelconque des revendications 21 à 39, **caractérisé en ce que** le composant du mélange ainsi, le cas échéant, que d'autres composants secondaires traditionnels sont placés dans un mélangeur et sont mélangés les uns avec les autres le cas échéant en ajoutant un composant de liaison jusqu'à l'obtention d'une homogénéité.

41. Procédé selon l'une quelconque des revendications 21 à 40, **caractérisé en ce que** les composants correspondant à la bande de particules souhaitée sont regroupées à partir de différentes fractions de particules et sont ensuite placées dans le mélangeur.

42. Procédé selon l'une quelconque des revendications 21 à 41, **caractérisé en ce que** le mélange positionné de façon correspondante avec une pression de compression de > 50 Mpa, notamment de 80 Mpa à 200 Mpa, de préférence de 130 Mpa, est compressé en un article de moulage.

43. Procédé selon l'une quelconque des revendications 21 à 42, **caractérisé en ce que** le mélange compressé est séché à une température supérieure à 100°C, notamment à 120°C à 150°C.

44. Procédé selon l'une quelconque des revendications 21 à 43, **caractérisé en ce que** le mélange après compression et séchage est calciné à des températures de formation de spinelles mixtes en formation.

45. Procédé selon l'une quelconque des revendications 21 à 44, **caractérisé en ce que** le mélange séché, compressé est calciné à 1 000°C jusqu'à 1 700°C, notamment de 1 200°C à 1 600°C.

46. Utilisation de corindon granulaire comme composant élastique pour un article de moulage ou des masses réfractaires.
